# EUROPÄISCHE PATENTANMELDUNG

(11) **EP 1 918 387 A1**
(43) Veröffentlichungstag der Anmeldung: **07.05.2008**
(21) Anmeldenummer: 07020695.8
(22) Anmeldetag: 23.10.2007
(51) Int. Cl.: C21D 9/02

(54) **Verfahren und Vorrichtung zum induktiven Härten von Schraubenfedern**

(30) Priorität: 31.10.2006 DE 102006051886
(71) Anmelder: Muhr und Bender KG, 57439 Attendorn (DE)
(72) Erfinder: Hufnagel, Thorsten, Dipl.-Wirt-Ing., 59889 Eslohe (DE); Bonse, Rudolf, Dr.-Ing., 57439 Attendorn (DE)
(74) Vertreter: Neumann, Ernst Dieter

(57) **Zusammenfassung**

Verfahren zum induktiven Erwärmen von Schraubenfedern, insbesondere von Ventilfedern, zum anschließenden Härten durch Abschrecken, bei welchem die Schraubenfedern einzeln fixiert und drehend angetrieben durch ein elektromagnetisches Wechselfeld geführt werden.

## Beschreibung

Die Erfindung betrifft ein Verfahren und eine Vorrichtung zum induktiven Erwärmen von Schraubenfedern, insbesondere von Ventilfedern, zum anschließenden Härten durch Abschrecken mit anschließendem Anlassen durch erneutes Erwärmen insgesamt als Vergüten bezeichnet. Beim induktiven Erwärmen von Bauteilen aus Eisen zum anschließenden Härten durch Abschrecken erfolgt durch ein elektromagnetisches Wechselfeld eine schnelle reproduzierbare Erwärmung auf 850 bis 1000°C, um Austenit (γ-Eisen) herzustellen. Bei einer schnellen anschließenden Abkühlung bis unter eine Temperatur von 250 °C wird das γ -Eisen zum Martensit umgewandelt, das heißt, die Kohlenstoffatome werden im entstandenen α-Eisen in feiner Verteilung fixiert. Die Umwandlung des Eisens, also das Härten hängt dabei auch von der Abkühlgeschwindigkeit ab. Nach dem Härten erfolgt in der Regel ein erneutes Erwärmen und Temperatur halten, also das Anlassen, bei einer Anlaßtemperatur vom 370° bis 500° C.

Bei Bauteilen in Form von Schraubenfedern, insbesondere bei Ventilfedern, ist es schwierig, die gesamte Werkstoffoberfläche zuverlässig mit der induktiven Erwärmung zu erfassen.

Aus der WO 205 081586 A1 ist ein Verfahren zum induktiven Erwärmen von Schraubenfedern bekannt, bei dem die Schraubenfedern mit horizontaler Mittelachse liegend in diskontinuierlicher Bewegung mittels eines Treppen- oder Stufenförderers schräg nach oben durch eine ringförmige, geschlossene Induktionsspule hindurchgeführt werden.

Der vorliegenden Erfindung liegt die Aufgabe zugrunde, ein verbessertes Verfahren und eine verbesserte Vorrichtung zum induktiven Erwärmen bzw. zum induktiven Härten oder Vergüten für Schraubenfedern, insbesondere für Ventilfedern bereitzustellen. Die Lösung besteht in einem Verfahren zum induktiven Erwärmen von Schraubenfedern, insbesondere von Ventilfedern, zum anschließenden Härten durch Abschrecken mit anschließendem Anlassen insgesamt als Vergüten bezeichnet, bei welchem die Schraubenfedern einzeln fixiert und drehend angetrieben durch ein elektromagnetisches Wechselfeld geführt werden. Hierbei wird insbesondere vorgeschlagen, daß die Schraubenfedern mit einer untereinander paralleler Mittelachse geradlinig durch das elektromagnetische Wechselfeld geführt werden. Weiterhin ist es günstig, wenn die Schraubenfedern mit etwa horizontaler Mittelachse auf einem im wesentlichen senkrechten Pfad durch das elektromagnetische Wechselfeld geführt werden.

Es ist insbesondere vorgesehen, daß die Schraubenfedern zum Fixieren und drehenden Antreiben einzeln auf Dorne aufgesteckt werden, wobei die Dorne in einer endlosen Schleife mit im wesentlichen senkrechter Bewegungsebene geführt werden.

Beim Aufsetzen der Schraubenfedern auf die Dorne ist einerseits vorzusehen, daß die drehend angetriebenen Dorne die Schraubenfedern schlupffrei mitnehmen, andererseits soll ein einfaches Lösen der Schraubenfedern von den Dornen gewährleistet sein, beispielsweise alleine durch ein Wegschwenken der Dorne aus einer horizontalen Position in eine nach unten weisende senkrechte Position. Diese Funktion kann sowohl durch Kraftschluß (Reibung) als auch durch Formschluss (Mitnehmer) sichergestellt werden.

Bezüglich der Verfahrensführung im Hinblick auf die gezielte induktive Erwärmung und Abkühlung der induktiven erwärmten Schraubenfedern werden folgende Vorschläge gemacht
daß das Wechselfeld mit einer Frequenz von 20 bis 300 kHz;
daß das Wechselfeld mit einer Leistung von 70 bis 120 kW insbesondere mit etwa 100 kW erzeugt wird;
daß die Schraubenfedern dem Wechselfeld für eine Dauer von 4 bis 12 Sekunden ausgesetzt werden;
daß die Schraubenfedern in der Randschicht auf eine Temperatur von über 850°C erwärmt werden und anschließend ein Abschrecken auf eine Temperatur von unter 250 °C erfolgt; oder
daß die Schraubenfedern durchgehend auf eine Temperatur von über 850 °C erwärmt werden und anschließend ein Abschrecken auf eine Temperatur von unter 250°C erfolgt;
hierbei kann das Abschrecken z.B. in einem Abschreckbecken mit einem geeigneten Abschreckmedium erfolgen.

Die Erfindung umfaßt weiterhin eine Vorrichtung zum induktiven Erwärmen von Schraubenfedern, insbesondere Ventilfedern, zum anschließenden Härten durch Abschrecken mit anschließendem Anlassen durch erneutes Erwärmen (Vergüten), mit einzelnen amagnetischen Haltern für die Schraubenfedern, die drehend antreibbar sind und durch das elektromagnetische Wechselfeld einer Induktoranordung nacheinander hindurchführbar sind. Hierbei ist vorgesehen, daß die Halter drehend antreibbare Dornen aufweisen, die parallel zueinander durch das Wechselfeld führbar sind.

Besonders günstig ist es, wenn die Halter auf Gliedern eines endlosen Gliederbandes angeordnet sind. Weiterhin wird vorgeschlagen, daß an den Haltern Zahnräder oder Reibrollen angeordnet sind, die mittels eines längs zum Gliederband außerhalb der Induktoranordnung geführten, endlosen Zahnriemens oder Reibriemens antreibbar sind. In bevorzugter Ausführung bestehen die Dorne aus amagnetischen nichtleitendem Werkstoff, insbesondere aus Quarzglas.

Wesentlich im Zusammenhang mit den vorstehend beschriebenen Ausführungen zur Führung der Schraubenfedern ist eine Ausbildung der Induktoranordnung, die in einem Schnitt senkrecht zum Bewegungspfad der Schraubenfedern, also insbesondere in einem horizontalen Schnitt U-förmig ist, wobei zwischen die offenen Schenkel des U's die Dorne der Halter mit gleichem Abstand zu den beiden Schenkeln hineinreichen. Bei genügendem Abstand der Induktoranordnung zu den Dornen und den Haltern, die beide aus nichtleitendem Material bzw. Isoliermaterial bestehen, werden Störfaktoren ausgeschlossen, die das gewünschte Wechselfeld nachteilig beeinflussen könnten. Eine gleichmäßige und relativ schnelle Drehung der Schraubenfedern auf ihrem Weg durch das Wechselfeld garantiert eine gleichmäßige Erwärmung an allen Oberflächen mit durchgehender Erwärmung.

Ein bevorzugtes Ausführungsbeispiel einer erfindungsgemäßen Vorrichtung ist in der Zeichnung dargestellt und wird nachfolgend beschrieben.
- Figur 1: zeigt eine erfindungsgemäße Vorrichtung ohne Induktoranordnung und mit teilweise weggeschnittenen Fördermitteln in 3-D Darstellungen;
- Figur 2: zeigt einen Teil der Vorrichtung nach Figur 1 in Draufsicht mit Induktor-anordnung;
- Figur 3: zeigt einen Teil der Induktoranordnung als Einzelheit in 3-D Darstellung;
- Figur 4: zeigt ein Prinzipbild der Induktoranordnung;

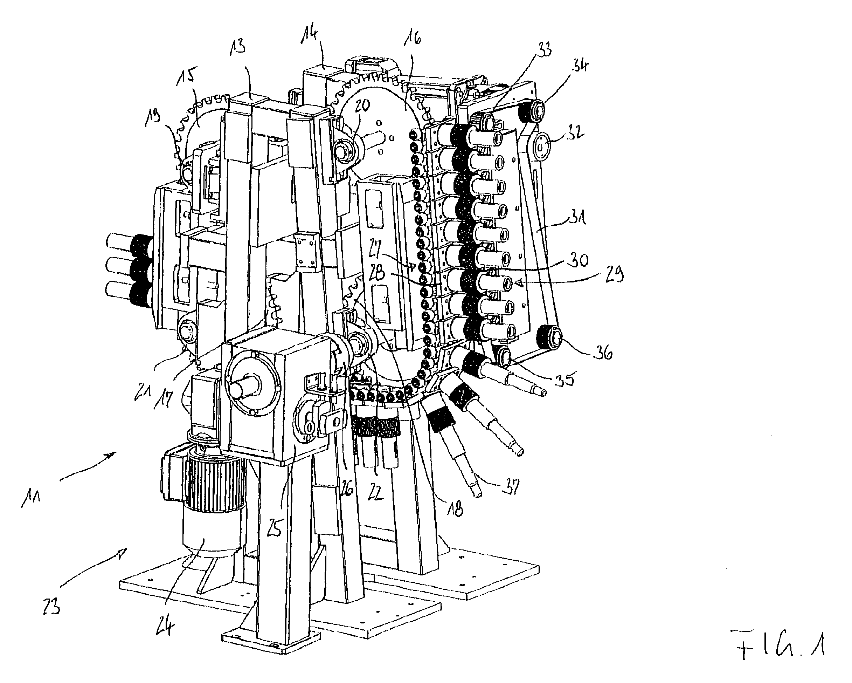

In Figur 1 ist ein Maschinengestell 11 mit zwei Ständeranordnungen 13, 14 gezeigt, zwischen denen eine Gliederbandführung angeordnet ist, von der vier Kettenräder 15, 16, 17, 18 erkennbar sind. Es sind hierbei jeweils die Lagerböcke 19, 20, 21, 22 der Kettenräder im vorderen Ständer 13 erkennbar. Vor dem vorderen Ständer 13 ist eine Antriebsanordnung 23 mit einem Antriebsmotor 24 und einem Getriebe 25 dargestellt, dessen Ausgangwelle über eine Kupplung 26 auf die Achse des Kettenrades 18 einwirkt. Über die vier Kettenräder läuft eine endlose Gliederkette 27, von der nur ein vorne liegender senkrechter Teil und ein unterer, in die Horizontale umgelenkter Teil dargestellt sind. Die Gliederkette 27 umfaßt einzelne Kettenglieder 28, von rechteckiger Plattenform, auf denen jeweils mittig drehbar gelagerte Halter 29 aufsitzen, deren Drehachsen normal zur Ebene der Kettenglieder 28 liegen. Nicht erkennbar ist hierbei jeweils eine geeignete Wälz- oder Gleitlagerung zwischen einem mit dem Kettenglied 28 verbundenen Teil und dem sichtbaren Teil eines Halters 29. An den Haltern 29 ist jeweils ein Zahnrad 30 angeordnet, das in dem dargestellten senkrechten Bereich der endlosen Gliederkette 27 mit einem Zahnriemen 31 in Eingriff ist, der über Umlenkrollen 33, 34, 35, 36 läuft und von einer Spannrolle 32 gespannt wird. Durch Antrieb des Zahnriemens 31 mit einem hier nicht erkennbaren Antriebsmotor werden die Halter 29 im erkennbaren senkrechten Teil der Gliederkette 27 während des Eingriffs mit dem Zahnriemen 31 angetrieben. An drei Haltern, die bereits aus dem Eingriff mit dem Zahnriemen 31 nach unten ausgetreten sind, sind in die Halter 29 eingesetzte Dorne 37 aus amagnetischem Material, insbesondere aus Quarzglas, eingesetzt, auf die die zu behandelnden Schraubenfedern mittels eines geeigneten Handhabungsautomaten aufgesetzt werden, wobei beim Wegschwenken der Halter 29 aus der horizontalen Position in eine nach unten gerichtete Position die Schraubenfedern abgeworfen werden und in ein Becken mit Abschreckflüssigkeit gelangen. Das Aufsetzten der Schraubenfedern auf die Dorne 37 erfolgt auf der Rückseite der gezeigten Vorrichtung, an der ein Kettenabschnitt der Gliederkette zu erahnen ist, der drei Halter erkennen läßt.

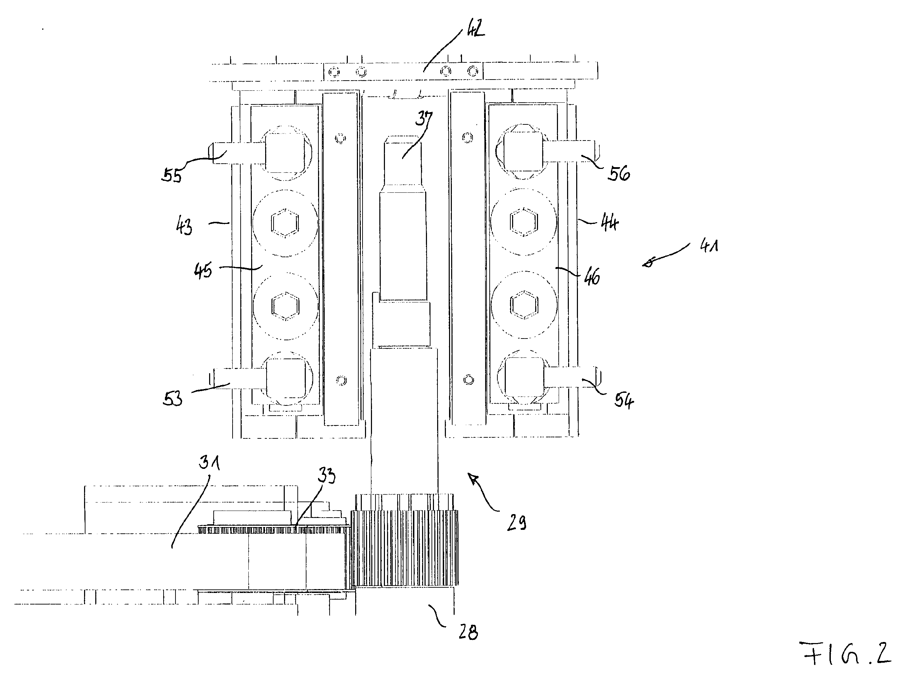

In Figur 2 ist ein Ausschnitt der Vorrichtung nach Figur 1 in Draufsicht gezeigt, wobei eines der Kettenglieder 28 der Gliederkette 27 sowie einer der Halter 29 mit eingesetztem Dorn 37 sichtbar ist. Es ist weiterhin das Zahnrad 30, das der mit dem angetriebenem Zahnriemen 31 in Eingriff ist, erkennbar, an dem die obere Umlenkrolle 33 sichtbar wird. Durch Antrieb des Zahnriemens, insbesondere in Gegenrichtung zur Bewegungsrichtung des Gliederbandes 27, können die Halter 29 in eine schnelle Drehbewegung gesetzt werden. Die Halter 29 werden hierbei durch eine zuvor nicht gezeigte Induktoranordnung 41 geführt, die zwei parallele Blöcke 43, 44 umfaßt, zwischen denen ein elektromagnetisches Wechselfeld erzeugt wird. Die Blöcke 43, 44 sind über ein Brückenelement 42 zu einer in Draufsicht U- förmigen Konfiguration verbunden. Die Induktoranordnung 41 umfaßt stromführende Leiterelemente und Kühlelemente, wobei an jedem der Blöcke 43, 44 Kühlwassereintrittsstutzen 53, 54 und Kühlwasseraustrittsstutzen 55, 56 zu erkennen sind.

Die Induktoranordnung umfaßt stromführende Leiterelemente und Kühlelemente, wobei an jedem der Kühlelemente 39, 40 Kühlwassereintrittsstutzen 53, 54 und Kühlwasseraustrittsstutzen 55, 56 vorgesehen sind.

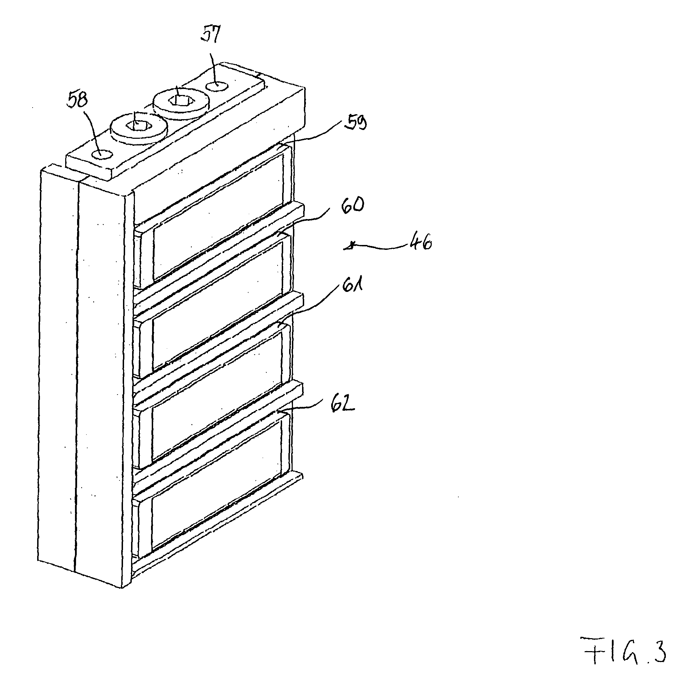

In Figur 3 ist das Kühlerelement 46 des Blockes 44 als Einzelteil darstellt. Entsprechend zu den zuvor genannten Kühlwassereintritts- und austrittsstutzen, die hier demontiert sind, sind Kühlwassereintritts- und ausstrittsöffnungen 57, 58 erkennbar. Auf der nach vorne weisenden Innenseite weist das Kühlelement vier U-förmige horizontalliegende Aufnahmenuten 59, 60, 61, 62 für Leiterschleifen auf, in die stromführende Leiterelemente eingelegt werden können.

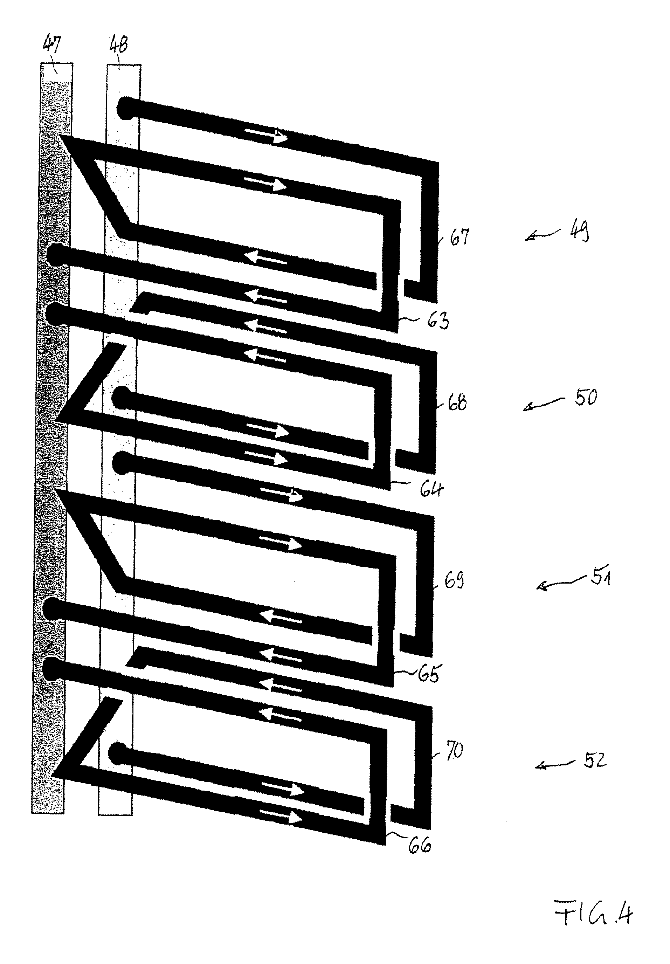

In Figur 4 sind die stromführenden Leiter der Induktoranordnung als Einzelheit dargestellt. Diese umfassen zwei elektrische Anschlußschienen 47, 48 die im Joch der Induktoranordnung angeordnet sind. An den Anschlußschienen sind vier Leiterschleifen 49, 50, 51, 52, befestigt, die jeweils linke U-förmige Bügel 63, 64, 65, 66 zum Einlegen in die Aufnahmenuten des Kühlerelements 45 und jeweils rechte U-förmige Bügel 67, 68, 69, 70 zum Einlegen in die Aufnahmenuten des Kühlerelements 46 aufweisen. Die Stromrichtung in den einzelnen Horizontalschenkeln der Leiterschleifen ist mit weißen Pfeilen bezeichnet.

### Bezugszeichenliste

- 11: Maschinengestell
- 12:
- 13: Ständeranordnung
- 14: Ständeranordnung
- 15: Kettenrad
- 16: Kettenrad
- 17: Kettenrad
- 18: Kettenrad
- 19: Lagerbock
- 20: Lagerbock
- 21: Lagerbock
- 22: Lagerbock
- 23: Antriebsanordnung
- 24: Antriebsmotor
- 25: Getriebe
- 26: Kupplung
- 27: Gliederkette
- 28: Kettenglied
- 29: Halter
- 30: Zahnrad
- 31: Zahnriemen
- 32: Spannrolle
- 33: Umlenkrolle
- 34: Umlenkrolle
- 35: Umlenkrolle
- 36: Umlenkrolle
- 37: Dorne
- 38:
- 39:
- 40:
- 41: Induktoranordnung
- 42: Joch
- 43: Block
- 44: Block
- 45: Kühlerelement
- 46: Kühlerelement
- 47: Anschlußschiene
- 48: Anschlußschiene
- 49: Induktorleiterschleife
- 50: Induktorleiterschleife
- 51: Induktorleiterschleife
- 52: Induktorleiterschleife
- 53: Kühlwassereintrittsstutzen
- 54: Kühlwassereintrittsstutzen
- 55: Kühlwasseraustrittsstutzen
- 56: Kühlwasseraustrittsstutzen
- 57: Kühlwassereintrittsöffnung
- 58: Kühlwasseraustrittsöffnung
- 59: Aufnahmenut
- 60: Aufnahmenut
- 61: Aufnahmenut
- 62: Aufnahmenut
- 63: Induktorbügel (rechts)
- 64: Induktorbügel (rechts)
- 65: Induktorbügel (rechts)
- 66: Induktorbügel (rechts)
- 67: Induktorbügel (links)
- 68: Induktorbügel (links)
- 69: Induktorbügeö (links)
- 70: Induktorbügel (links)

## Patentansprüche

1. Verfahren zum induktiven Erwärmen von Schraubenfedern, insbesondere von Ventilfedern, zum anschließenden Härten durch Abschrecken, bei welchem die Schraubenfedern einzeln fixiert und drehend angetrieben durch ein elektromagnetisches Wechselfeld geführt werden.

2. Verfahren nach Anspruch 1,
**dadurch gekennzeichnet,**
**daß** die Schraubenfedern mit untereinander paralleler Mittelachse geradlinig durch das elektromagnetische Wechselfeld geführt werden.

3. Verfahren nach einem der Ansprüche 1 oder 2,
**dadurch gekennzeichnet,**
**daß** die Schraubenfedern mit etwa horizontaler Mittelachse auf einem im wesentlichen senkrechten Pfad durch das elektromagnetische Wechselfeld geführt werden.

4. Verfahren nach einem der Ansprüche 1 bis 3,
**dadurch gekennzeichnet,**
**daß** die Schraubenfedern zum Fixieren und drehenden Antreiben einzeln auf Dorne aufgesteckt werden.

5. Verfahren nach Anspruch 4,
**dadurch gekennzeichnet,**
**daß** die Dorne in einer endlosen Schleife mit im wesentlichen senkrechter Bewegungsebene geführt werden.

6. Verfahren nach einem der Ansprüche 1 bis 5,
**dadurch gekennzeichnet,**
**daß** das Wechselfeld mit einer Frequenz von 20 bis 300 kHz betrieben wird.

7. Verfahren nach einem der Ansprüche 1 bis 5,
**dadurch gekennzeichnet,**
**daß** das Wechselfeld mit einer Leistung von 70 bis 120 kW erzeugt wird.

8. Verfahren nach einem der Ansprüche 1 bis 7,
**dadurch gekennzeichnet,**
**daß** die Schraubenfedern dem Wechselfeld für eine Dauer von 4 bis 12 Sekunden ausgesetzt werden.

9. Verfahren nach einem der Ansprüche 1 bis 8,
**dadurch gekennzeichnet,**
**daß** die Schraubenfedern in der Randschicht auf eine Temperatur von über 850°C erwärmt werden und anschließend ein Abschrecken auf eine Temperatur von unter 250 °C erfolgt.

10. Verfahren nach einem der Ansprüche 1 bis 8,
**dadurch gekennzeichnet,**
**daß** die Schraubenfedern durchgehend auf eine Temperatur von über 850 °C erwärmt werden und anschließend ein Abschrecken auf eine Temperatur von unter 250°C erfolgt.

11. Vorrichtung zum induktiven Erwärmen von Schraubenfedern, insbesondere Ventilfedern, zum anschließenden Härten durch Abschrecken, mit einzelnen amagnetischen Haltern (29) für die Schraubenfedern, die drehend antreibbar sind und durch das elektromagnetische Wechselfeld einer Induktoranordung (41) nacheinander hindurchführbar sind.

12. Vorrichtung nach Anspruch 11,
**dadurch gekennzeichnet,**
**daß** die Halter (29) drehend antreibbare Dorne (37) aufweisen, die parallel zueinander durch das Wechselfeld führbar sind.

13. Vorrichtung nach einem der Ansprüche 11 oder 12,
**dadurch gekennzeichnet,**
**daß** die Halter (29) auf Gliedern (28) eines endlosen Gliederbandes angeordnet sind.

14. Vorrichtung nach einem der Ansprüche 11 bis 13,
**dadurch gekennzeichnet,**
**daß** an den Haltern (29) Zahnräder (30) oder Reibrollen angeordnet sind, die mittels eines längs zum Gliederband (28) außerhalb der Induktoranordnung (41) geführten endlosen Zahnriemens (31) oder Reibriemens antreibbar sind.

15. Vorrichtung nach einem der Ansprüche 12 bis 14,
**dadurch gekennzeichnet,**
**daß** die Dorne (37) der Halter (29) aus amagnetischem nichtleitenden Werkstoff, insbesondere aus Quarzglas bestehen.

16. Vorrichtung nach einem der Ansprüche 1 bis15,
**dadurch gekennzeichnet,**
**daß** die Induktoranordnung (41) im Querschnitt senkrecht zur Bewegungsrichtung der Halter (29) U-förmig ist und zwei planparallele Schenkel (42, 43) bildet.
